(19) Europäisches Patentamt / European Patent Office / Office européen des brevets

(11) **EP 2 013 371 B1**

(12) **EUROPÄISCHE PATENTSCHRIFT**

(45) Veröffentlichungstag und Bekanntmachung des Hinweises auf die Patenterteilung:
**07.09.2011  Patentblatt 2011/36**

(21) Anmeldenummer: **07724618.9**

(22) Anmeldetag: **26.04.2007**

(51) Int Cl.:
*C22C 9/02* (2006.01)   *F16C 33/00* (2006.01)

(86) Internationale Anmeldenummer:
**PCT/EP2007/003688**

(87) Internationale Veröffentlichungsnummer:
**WO 2007/124915 (08.11.2007 Gazette 2007/45)**

(54) **VERWENDUNG VON EINER KUPFER-NICKEL-ZINN-LEGIERUNG**

USE OF A COPPER-NICKEL-TIN ALLOY

UTILISATION D'UN ALLIAGE DE CUIVRE MULTI-MATIÈRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.04.2006  DE 102006019827**

(43) Veröffentlichungstag der Anmeldung:
**14.01.2009  Patentblatt 2009/03**

(73) Patentinhaber: **Wieland-Werke AG
89079 Ulm (DE)**

(72) Erfinder:
• **ABABNEH, Maher
  89077 Ulm (DE)**
• **KUHN, Hans-Achim
  89257 Illertissen (DE)**
• **VOGGESER, Volker
  89250 Senden (DE)**

(56) Entgegenhaltungen:
**EP-A- 0 962 541      GB-A- 1 543 733
JP-A- 1 025 929      JP-A- 2 107 730
JP-A- 5 156 391      JP-A- 63 243 254
JP-A- 63 274 729     KR-A- 20010 009 894
US-A- 5 019 185      US-A- 5 021 105**

**Beschreibung**

Die Erfindung betrifft die Verwendung einer Kupfer-Mehrstofflegierung für Gleitlager, Buchsen oder Anlaufscheiben

Seit langer Zeit sind Knetlegierungen auf der Basis von Kupfer-Nickel-Zinn bekannt. Beispielsweise ist in der Patentschrift US 1,535,542 eine derartige Legierung in Verbindung mit dem Ziel der Verbesserung von Materialeigenschaften bezüglich Korrosionsbeständigkeit, Duktilität und Formbarkeit beschrieben.

Auch aus der Patentschrift US 1,816,509 sind eine Kupfer-Nickel-Zinn-Legierung sowie ein Verfahren zur Weiterbehandlung derartiger Legierungen bekannt. Das Verfahren beinhaltet nach dem Gießen der Legierung einen Kaltumformungsprozess und zum Einstellen besonderer Materialeigenschaften eine Temperaturbehandlung zum Homogenisieren und Auslagern der Legierung. Durch die Temperaturbehandlung bilden sich kontinuierliche und diskontinuierliche Ausscheidungen unter Bildung einer weiteren $\gamma$-Phase.

Aus der Druckschrift DE 41 21 994 C2 ist ein weiteres Verfahren bekannt, mit dem eine Kupfer-Nickel-Zinn-Legierung für Gleitelementanwendungen als Knetlegierung übliche Schritte des Gießens und der Umformung durchlaufen, wobei sich nach der letzten Kaltumformung durch eine Wärmebehandlung die $\gamma$-Phase als kontinuierliche und diskontinuierliche Ausscheidungen bildet. Der Volumenanteil der gebildeten $\gamma$-Phase ist dabei von der gewählten Prozessführung bei der Temperaturbehandlung abhängig.

Im weiteren Verlauf sind zahlreiche Untersuchungen im System der Kupfer-Nickel-Zinn-Legierungen durchgeführt worden (US 4,142,918, US 4,406,712 WO 2005/108631 A1 und US 5,019,185), um die Materialeigenschaften, insbesondere auch in Bereich der Elektronik, stetig weiterzuentwickeln. Allerdings hat sich in der Praxis erwiesen, dass manche Eigenschaftskombinatiorien, wie beispielsweise die Verschleißbeständigkeit und die Warmfestigkeit, mit der bekannten Prozesstechnologie nicht gleichzeitig optimiert werden können. Die Verbesserung einer Materialeigenschaft geht dann zu Lasten einer für gewisse Anwendungsbereiche ebenso wichtigen anderen Eigenschaft.

Daher liegt der Erfindung die Aufgabe zugrunde, eine Kupfer-Mehrstofflegierung dergestalt weiterzubilden, dass sich sowohl eine hohe mechanische Verschleißbeständigkeit als auch eine hohe Warmfestigkeit ausbilden.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung geht dabei von der Überlegung aus, eine Kupfer-Mehrstofflegierung anzugeben, die gleichzeitig eine sehr gute Verschleißbeständigkeit und bei der Verwendung als Gleilager, Buchse oder Anlaufscheibe in thermisch belasteter Umgebung eine ausgezeichnete Warmfestigkeit bietet. Bei Silicium- bzw. Mangangehalten über den angegebenen Maximalwerten von 3 Gew.-% bzw. 5 Gew.-% neigt die Legierung zur Versprödung, wodurch mit Schwierigkeiten bei der Weiterverarbeitung, insbesondere wegen Randrissen im Bandmaterial beim Walzen, zu rechnen ist. Ein Zusatz der Elemente Ti, Co, Cr und Fe dient zur Bildung weiterer Silizidphasen. Sb und Al kann aufgrund der Verbesserung der Gleiteigenschaften bzw. der Korrosionsbeständigkeit hinzugefügt werden. Die weiteren Elemente B, Zr und S dienen zur Desoxidation der Schmelze oder liefern einen Beitrag zur Kornfeinung. Das Element Phosphor dient ebenfalls zur Desoxidation, kann jedoch auch Phosphidphasen bilden, die einen wichtigen Beitrag zur Härtesteigerung der Matrix liefern. Das Element Blei steht im Zusammenhang mit der Herstellung von Gusslegierungen, in Knetlegierungen ist es eher nicht oder zu ganz geringen Anteilen vorhanden.

Die erfindungsgemäßen Mn-Ni-Silizidphasen, die ein Massenverhältnis der Elemente $[w(Mn) + w(Ni)]/w(Si)$ im Bereich von 1,8/1 bis 7/1 aufweisen, dienen insbesondere der Erhöhung des Traganteils bei Gleitelementanwendungen. Es handelt sich bei diesen intermetallischen Phasen um Mischsilizide. Die erfindungsgemäße Legierung mit Mn-Ni-Silizidphasen bildet insbesondere bei etwas erhöhten Mangananteilen eine zunehmend feinere Kornstruktur aus, die prinzipiell eine vorteilhafte Steigerung der Bruchdehnung $A_5$ zur Folge haben.

Die erfindungsgemäßen Cu-Ni-Sn-Knetlegierungen sind spinodal entmischende Systeme, die sich als Lagerwerkstoffe im Motorenbau als Vollmaterial und in Verbundgleitelementen besonders eignen. Diese Werkstoffe besitzen gute Reib- und Verschleißeigenschaften sowie eine gute Korrosionsbeständigkeit. Auch die thermische Stabilität ist ausgezeichnet.

Mit Ni-Gehalten von 1 bis 15 Gew.-% und Sn-Gehalten von 2 bis 12 Gew.-% können bei diesen Materialien Kaltumformgrade bis zu 60 % erzielt werden. In Kombination mit Weichglühen gelingt es, für Werkstoffverbunde geeignete dünne Bänder zu produzieren. Auch können diese Legierungen im Temperaturbereich zwischen 300 und 500 °C ausgelagert werden. Hierdurch verfestigt sich das Material infolge der ablaufenden spinodalen Entmischung. Zudem können sich kontinuierliche bzw. diskontinuierliche Ausscheidungen bilden. Diese Form der Ausscheidungshärtung ist den binären Kupfer-Basislegierungen deutlich überlegen.

Gegenüber binären Kupfer-Basislegierungen und herkömmlichen Cu-Ni-Sn-Legierungen bestehen die mit der Erfindung erzielten Vorteile insbesondere darin, dass die Materialeigenschaften mittels Walzen, Homogenisierungsglühen und Auslagern optimal auf den jeweiligen Bedarf angepasst werden können. So kann beispielsweise auch eine weichere oder auch härtere Kupfer-Mehrstofflegierungsschicht durch mechanische und thermische Behandlung in Verbundgleitelementen mit härteren Materialien, beispielsweise Stahl, kombiniert werden.

Vorteilhafterweise kann der Massenanteil der Elemente die folgende Beziehung erfüllen: [w(Ni) - w(Mn) - w(Sn)] > 0. Mit anderen Worten, der Nickelgehalt ist größer als der Zinn- und Mangangehalt zusammen, da Nickel sowohl zur Silizidbildung als auch zur spinodalen Entmischung im Idealfall zu gleichen Anteilen wie Zinn enthalten sein soll. Hierdurch bilden sich sowohl intermetallische Phasen, die den Traganteil bei Gleitlageranwendungen steigern und auch bei Steckverbindern den Verschleiß reduzieren. Parallel hierzu kann bezüglich der Matrix durch eine Temperaturbehandlung eine Härtesteigerung durch spinodale Entmischung erzielt werden.

In vorteilhafter Ausgestaltung kann der Massenanteil der Elemente die folgende Beziehung erfüllen: w(Mn) > w(Si). Ist der Mangangehalt größer als der Siliziumgehalt, wird zur Silizidbildung genügend Mangan zur Verfügung stehen. Überraschenderweise wird bei einer Steigerung des Mangananteils über den Siliziumgehalt hinaus, in der Matrix eine weitere Kornfeinung festgestellt.

Vorteilhafterweise ist der Wert für die Bruchdehnung $A_5$ bei einer Temperatur von 400°C größer als 10 %. Demnach verhält sich die erfindungsgemäße Legierung duktil. Dies ist in erster Linie auf eine Kornfeinung zurückzuführen. In einem Temperaturbereich von Raumtemperatur bis ca. 400°C liegt die Bruchdehnung auf nahezu konstantem Niveau bei 18 - 20 %. Vergleichbare Legierungen ohne Silizidanteile verhalten sich dagegen ausgesprochen spröde. Bei diesen Legierungen stellt sich unter gleichen Bedingungen ein Bruchdehnungswert von 8 bis 15 % ein, der allerdings bei Temperaturen ab ungefähr 300°C auf einen Wert von nur 4 % einbricht. Dieser Effekt ist analog zum sogenannten Reckalterungseffekt bei lange gelagerten oder temperaturbehandelten Stählen zu sehen. Ein vergleichbarer Versprödungseffekt ist auch bei Bronzen bekannt.

In bevorzugter Ausgestaltung kann die Kristallitgröße der Mn-Ni-Silizidphasen 0,1 bis 100 μm betragen. Zum Teil liegen dabei auch langgestreckte Partikel in der Matrix vor. Derartige Partikelgrößen sind besonders vorteilhaft für Gleitlageranwendungen bezüglich der jeweiligen Reibpaarung.

Vorteilhafterweise kann die Legierung 0,01 bis 0,06 Gew.-% P enthalten, wobei in der Matrix fein verteilte Ni-Phosphidphasen ausgebildet sind. Diese Phasen wirken härtesteigernd für die Matrix. Bereits bei einem Anteil um 100 ppm ist eine signifikante Steigerung der Härte erzielbar. Vorteilhafterweise kann die mittlere Korngröße der fein verteilten Ni-Phosphidphasen unter 100 nm liegen.

In besonders bevorzugter Ausgestaltung der Erfindung kann die Kupfer-Mehrstofflegierung von 0,1 bis 2,5 Gew.-% Mn und von 0,1 bis 1,5 Gew.-% Si enthalten. Es hat sich gezeigt, dass modifizierte Cu-Ni-Sn-Varianten mit einem Si-Gehalt bis zu 1,5 Gew.-% und einem Mn-Gehalt bis 2,5 Gew.-% mit einer Verbesserung der Werkstoffeigenschaften gefertigt werden können. Weitere Laborversuche wurden dazu ebenfalls bereits durchgeführt und die Grenzwerte bestätigt.

Hierdurch wird das Ziel verfolgt, eine weitere Verbesserung der Verschleißbeständigkeit von Cu-Ni-Sn-Legierungen durch die Bildung von harten intermetallischen Phasen einzustellen. Bei diesen weiteren Hartstoffphasen handelt es sich um Mangan-Nickel-Silizide. Cu-Ni-Sn-Legierungen zeigen bereits als solche sehr gute Eigenschaften in Bezug auf die Gleiteigenschaften, Korrosionsbeständigkeit und Relaxationsbeständigkeit bei Raumtemperatur. Mit den gebildeten harten Phasen wird auch die Adhäsionsneigung im Bereich der Mischreibung verringert und die Warmfestigkeit sowie Duktilität bei höheren Temperaturen weiter gesteigert.

Durch Kombination der zur Verschleißbeständigkeit beitragenden Gefügebestandteile in Verbindung mit einer spinodal entmischenden Legierung des Systems Cu-Ni-Sn gelingt es überraschenderweise einerseits, das Einlaufverhalten zu Beginn einer Belastung durch Verschleiß zu reduzieren, andererseits erweist sich ein solcher Werkstoff aus Cu-Ni-Sn-Mn-Si eben als warmfest sowie auch ausreichend duktil.

Vorteilhafterweise kann die Kupfer-Mehrstofflegierung von 0,1 bis 1,6 Gew.-% Mn und von 0,1 bis 0,7 Gew.-% Si enthalten. Insbesondere wurde sichergestellt, dass bei einem Si-Gehalt bis 0,7 Gew.-% und einem Mn-Gehalt von bis 1,6 Gew.-% tatsächlich auch aus fertigungstechnischer Sicht problemlos gefertigt werden kann. Bei höheren Gehalten von Silicium und Mangan sollten seitens der Gießparameter entsprechende Anpassungen im Rahmen üblicher Vorkehrungen vorgenommen werden.

Vorteilhafterweise kann die Kupfer-Mehrstofflegierung zumindest eine Temperaturbehandlung bei 300 bis 500 °C durchlaufen. Dabei verfestigt sich das Material durch die ablaufende spinodale Entmischung.

In bevorzugter Ausgestaltung der Erfindung kann die Kupfer-Mehrstofflegierung zumindest eine Temperaturbehandlung bei 600 bis 800 °C durchlaufen. Durch die Temperaturbehandlung in diesem Bereich findet eine Homogenisierung statt, durch die das Material duktiler wird.

In besonders bevorzugter Ausgestaltung der Erfindung kann die Kupfer-Mehrstofflegierung eine Kombination aus zumindest einem Lösungsglühen bei 600 bis 800 °C und zumindest einem Auslagern bei 300 bis 500 °C durchlaufen. Dabei verfestigt sich das Material durch die ablaufende spinodale Entmischung. Durch die Temperaturbehandlung in diesem Bereich findet eine Homogenisierung statt, durch die das Material weicher wird. Durch ein Homogenisierungsglühen und der Aushärtung des Materials beim Auslagern bzw. beim Walzen lassen sich die Werkstoffeigenschaften der Kupfer-Mehrstofflegierung optimal auf den jeweiligen Bedarf anpassen.

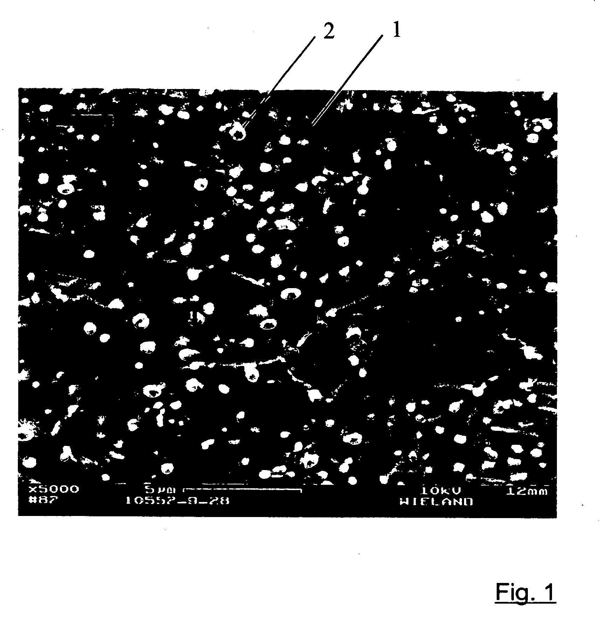

Ausführungsbeispiele der Erfindung werden anhand des folgenden Beispiels und der in Fig. 1 gezeigten rasterelektronenmikroskopischen Aufnahme näher erläutert.

Beispiel:

In Versuchsreihen wurden Blöcke mit verschiedenen Mn-Si-Verhältnissen gegossen und anschließend kalt weiter bearbeitet. Die untersuchten Legierungsvarianten sind in Tabelle 1 zusammengefasst. Die Gussblöcke wurden im Temperaturbereich zwischen 700 bis 800°C homogenisiert und dann gefräst.

Durch mehrere Kaltumformstufen und Zwischenglühungen wurden Bänder mit Dicken zwischen 2,5 und 2,85 mm hergestellt. Die Bänder wurden kaltgewalzt und Temperaturbereich zwischen 700 bis 800°C geglüht, um ein ausreichendes Kaltumformvermögen zu erzielen.

Tabelle 1:

| Cu-Ni-Sn+Mn+Si | Cu [Gew.-%] | Ni [Gew.-%] | Sn [Gew.-%] | Mn [Gew.-%] | Si [Gew.-%] |
|---|---|---|---|---|---|
| Variante 1 | Rest | 5,6 - 6,0 | 5,2 - 5,6 | 1,7 - 2,0 | 0,2 - 0,3 |
| Variante 2 | Rest | 5,6 - 6,0 | 5,2 - 5,6 | 1,3 - 1,6 | 0,2 - 0,3 |
| Variante 3 | Rest | 5,6 - 6,0 | 5,2 - 5,6 | 1,3 - 1,6 | 0,5 - 0,7 |
| Variante 4 | Rest | 5,6 - 6,0 | 5,2 - 5,6 | 0,8 - 1,0 | 0,1 - 0,3 |
| Variante 5 | Rest | 5,6 - 6,0 | 5,2 - 5,6 | 0,8 - 1,0 | 0,3 - 0,5 |
| Variante 6 | Rest | 5,6 - 6,0 | 5,2 - 5,6 | 0,4 - 0,6 | 0,4 - 0,6 |
| Variante 7 | Rest | 5,6 - 6,0 | 5,2 - 5,6 | 0,9 - 1,1 | 0,9 - 1,1 |
| Variante 8 | Rest | 5,6 - 6,0 | 5,2 - 5,6 | 1,8 - 2,1 | 0,5 - 0,6 |
| Variante 9 | Rest | 5,6 - 6,0 | 5,2 - 5,6 | 1,8 - 2,1 | 0,9 - 1,1 |

Erwartungsgemäß hat sich bestätigt, dass das Kaltumformvermögen der mit Siliziden modifizierten Cu-Ni-Sn-Legierung etwas geringer ist als bei einer Cu-Ni-Sn-Legierung ohne weitere Silizidphasen.

Derartige Bänder können in einem weiteren Verfahrensschritt durch Walzplattierverfahren zu einem festen Werkstoffverbund vereinigt werden. Mit Siliziden modifizierte Cu-Ni-Sn-Legierungen haben auch einen deutlich geringeren Reibungskoeffizient im Vergleich zur silizidfreien Variante. Die erfindungsgemäße Legierung eignet sich damit als Vormaterial für den Einsatz als Gleitlager Buchsen oder Anlaufscheiben im jeweiligen Automotivebereich für Motoren, Getriebe und Hydraulik.

Fig. 1 zeigt eine rasterelektronenmikroskopische Aufnahme der Oberfläche einer Kupfer-Mehrstofflegierung. Deutlich zu sehen sind die relativ fein verteilten Mangan-Nickel-Silizide 2, die in die Legierungsmatrix 1 eingebettet sind. Diese Silizide bilden sich als Erstausscheidung in der Schmelze bereits in einem Temperaturbereich um 1100 °C. Bei günstiger Wahl der Schmelzezusammensetzung werden das zur Verfügung stehende Silicium und Mangan mit einem im Überschuss vorhandenen Nickelanteil zum Silizid ausgeschieden. Der dabei im Silizid verbrauchte Nickelanteil kann für die spätere Ausbildung der Matrix durch einen höheren Nickelanteil in der Schmelze entsprechend berücksichtigt werden.

Die Zusammensetzung der Silizide muss dabei nicht unbedingt einer vorgegebenen Stöchiometrie entsprechen. Je nach Prozessführung, insbesondere durch die Abkühlrate bestimmt, scheiden sich ternäre intermetallische Phasen in Form der Silizide des Typs $(Mn,Ni)_xSi$ aus, die im Bereich zwischen den binären Randphasen $Mn_5Si_3$ und $Ni_2Si$ liegen.

Die mechanischen Eigenschaften von Bändern der silizidhaltigen Kupfer-Mehrstofflegierung wiesen im walzharten Zustand eine Zugfestigkeit Rm von 560 MPa und eine Streckgrenze von 480 MPa mit einer Bruchdehnung A5 von 25% auf. Die Härte HB betrug ca. 176.

Nach Auslagerung der Bänder wurden eine Zugfestigkeit Rm von 715 MPa und eine Streckgrenze $Rp_{0,2}$ von 630 MPa mit einer Bruchdehnung A5 von 17 % ermittelt. Die Härte HB betrug ca. 235.

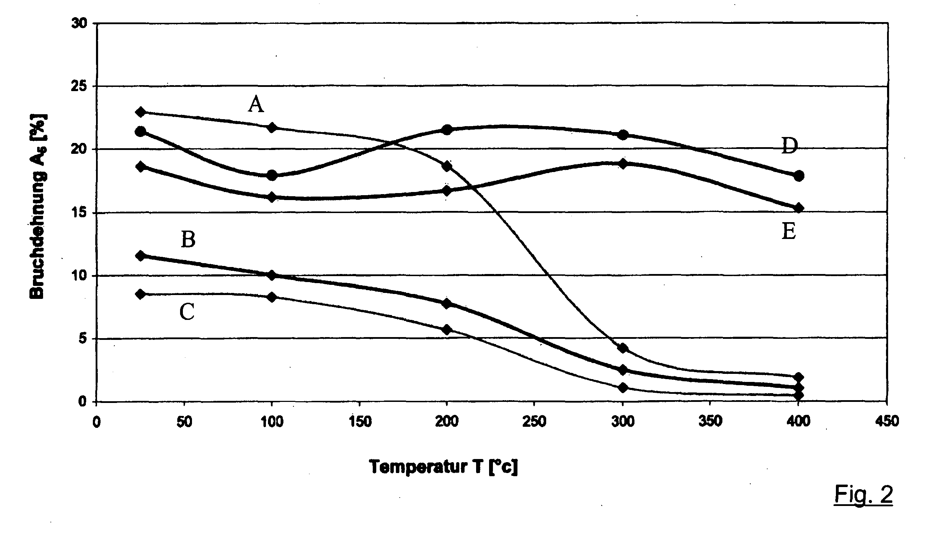

Fig. 2 zeigt ein Diagramm mit Messwerten zur Bruchdehnung $A_5$ für erfindungsgemäße Kupfer-Mehrstofflegierungen mit ausgebildeten Silizidphasen (Kurven D E) und gattungsgemäße herkömmliche Kupfer-Mehrstofflegierungen (Kurven A, B, C) ohne Silizidphasen. Die unterschiedlichen Bruchdehnungswerte bei Raumtemperatur sind auf eine unterschiedliche Auslagerungstemperatur im Bereich zwischen 300 bis 500 °C zurückzuführen. Bei Temperaturen ab ca. 250°C sinkt der Wert für die Bruchdehnung $A_5$ bei allen Proben, bei denen keine Silizidphasen ausgebildet sind, unter 10 %. Nur bei erfindungsgemäßen Legierungen verbleibt dieser Wert über den gesamten Temperaturbereich von Raumtemperatur bis 400°C deutlich größer als 10 %. Im vorliegenden Falle sogar über 15 %. Die erfindungsgemäße Legierung ist demnach weitaus duktiler als die bisher bekannten vergleichbaren Legierungen ohne Mangan und Silicium.

**Patentansprüche**

1. Verwendung einer Kupfer-Mehrstofflegierung für Gleitlager, Buchsen oder Anlaufscheiben, bestehend aus [in Gew.-%]:

   | Ni | 1,0 bis 15,0 %, |
   |----|-----------------|
   | Sn | 2,0 bis 12,0 %, |
   | Mn | 0,1 bis 5,0 %, |
   | Si | 0,1 bis 3,0 %, |

   Rest Cu sowie unvermeidbare Verunreinigungen,
   wahlweise bis zu 0,5 % P,
   wahlweise einzeln oder in Kombination insgesamt bis zu 1,5 % Ti, Co, Cr, Al, Fe, Zn, Sb,
   wahlweise einzeln oder in Kombination insgesamt bis zu 0,5 % B, Zr, S, wahlweise bis zu 5 % Pb,
   mit Mn-Ni-Silizidphasen, die ein Massenverhältnis der Elemente [w(Mn) + w(Ni)]/w(Si) im Bereich von 1,8/1 bis 7/1 aufweisen.

2. Verwendung nach Anspruch 1, **dadurch gekennzeichnet, dass** der Massenanteil der Elemente die folgende Beziehung erfüllt:

$$[w(Ni) - w(Mn) - w(Sn)] > 0.$$

3. Verwendung nach Anspruch 1 oder 2, **dadurch gekennzeichnet, dass** der Massenanteil der Elemente die folgende Beziehung erfüllt: w(Mn) > w(Si).

4. Verwendung nach Anspruch 1, 2 oder 3, **dadurch gekennzeichnet, dass** der Wert für die Bruchdehnung $A_5$ bei einer Temperatur von 400°C größer als 10 % ist.

5. Verwendung nach einem der Ansprüche 1 bis 4, **dadurch gekennzeichnet, dass** die Kristallitgröße der Mn-Ni=Silizidphasen 0,1 bis 100 $\mu$m beträgt.

6. Verwendung nach einem der Ansprüche 1 bis 5, **dadurch gekennzeichnet, dass** diese 0,01 bis 0,06 % P enthält, wobei in der Matrix fein verteilte Ni-Phosphidphasen ausgebildet sind.

7. Verwendung nach Anspruch 6, **dadurch gekennzeichnet, dass** die mittlere Korngröße der fein verteilten Ni-Phosphidphasen unter 100 nm liegt.

8. Verwendung nach einem der Ansprüche 1 bis 7, **dadurch gekennzeichnet, dass** diese von 0,1 bis 2,5 % Mn und von 0,1 bis 1,5 % Si enthält.

9. Verwendung nach Anspruch 8, **dadurch gekennzeichnet, dass** diese von 0,1 bis 1,6 % Mn und von 0,1 bis 0,7 % Si enthält.

10. Verwendung nach einem der Ansprüche 1 bis 9, **dadurch gekennzeichnet, dass** diese zumindest eine Temperaturbehandlung bei 300 bis 500 °C durchlaufen hat.

11. Verwendung nach einem der Ansprüche 1 bis 9, **dadurch gekennzeichnet, dass** diese zumindest eine Temperaturbehandlung bei 600 bis 800 °C durchlaufen hat.

12. Verwendung nach einem der Ansprüche 1 bis 9, **dadurch gekennzeichnet, dass** diese eine Kombination aus zumindest einem Lösungsglühen bei 600 bis 800 °C und zumindest einem Auslagern bei 300 bis 500 °C durchlaufen hat.

**EP 2 013 371 B1**

**Claims**

1.  Use of a multicomponent copper alloy for friction bearings, jacks or thrust rings, comprising [in % by weight]

|     |                |
| --- | -------------- |
| Ni  | 1.0 to 15.0 %, |
| Sn  | 2.0 to 12.0 %, |
| Mn  | 0.1 to 5.0 %,  |
| Si  | 0.1 to 3.0 %,  |

remainder Cu and unavoidable impurities,
optionally up to 0.5 % P,
optionally individually or in combination, in total, up to 1.5 % Ti, Co, Cr, Al, Fe, Zn, Sb,
optionally individually or in combination, in total, up to 0.5 % B, Zr, S,
optionally up to 5 % Pb,
with Mn-Ni silicide phases which have a mass ratio of the elements [w(Mn) + w(Ni)]/w(Si) in the range of from 1.8/1 to 7/1.

2.  Use according to claim 1, **characterised in that** the mass fraction of the elements satisfies the following relationship:

$$[w(Ni) - w(Mn) - w(Sn)] > 0.$$

3.  Use according to claim 1 or 2, **characterised in that** the mass fraction of the elements satisfies the following relationship: $w(Mn) > w(Si)$.

4.  Use according to claim 1, 2 or 3, **characterised in that** the value of the elongation at break $A_5$ at a temperature of 400°C is more than 10%.

5.  Use according to any one of claims 1 to 4, **characterised in that** the crystallite size of the Mn-Ni silicide phases is from 0.1 to 100 $\mu$m.

6.  Use according to any one of claims 1 to 5, **characterised in that** the alloy contains from 0.01 to 0.06 % P, finely distributed Ni phosphide phases being formed in the matrix.

7.  Use according to claim 6, **characterised in that** the average grain size of the finely distributed Ni phosphide phases is less than 100 nm.

8.  Use according to any one of claims 1 to 7, **characterised in that** the alloy contains from 0.1 to 2.5 % Mn and from 0.1 to 1.5 % Si.

9.  Use according to claim 8, **characterised in that** the alloy contains from 0.1 to 1.6 % Mn and from 0.1 to 0.7 % Si.

10. Use according to any one of claims 1 to 9, **characterised in that** the alloy has undergone at least one heat treatment at from 300 to 500°C.

11. Use according to any one of claims 1 to 9, **characterised in that** the alloy has undergone at least one heat treatment at from 600 to 800°C.

12. Use according to any one of claims 1 to 9, **characterised in that** the alloy has undergone a combination of at least one solution anneal at from 600 to 800°C and at least one age hardening at from 300 to 500°C.

**Revendications**

1.  Utilisation d'un alliage de cuivre multiconstituant pour des paliers à glissement, des coussinets ou des plaques de butée constitué de [en pourcent en masse] :

6

Ni de 1,0 à 15,0 %,
Sn de 2,0 à 12,0 %,
Mn de 0,1 à 5,0 %,
Si de 0,1 à 3,0 %,
le reste étant constitué de Cu ainsi que d'impuretés inévitables,
éventuellement jusqu'à 0,5 % de P,
éventuellement individuellement ou en combinaison au total jusqu'à 1,5 % de Ti, Co, Cr, Al, Fe, Zn, Sb,
éventuellement individuellement ou en combinaison au total jusqu'à 0,5 % de B, Zr, S,
éventuellement jusqu'à 5 % de Pb,
avec des phases de siliciure de Mn-Ni, lesquelles présentent un rapport massique des éléments [poids(Mn) + poids(Ni)]/poids(Si) dans un domaine de 1,8/1 à 7/1.

2. Utilisation selon la revendication 1, **caractérisée en ce que** la part en masse des éléments satisfait la relation suivante

$$[poids(Ni) - poids(Mn) - poids(Sn)] > 0.$$

3. Utilisation selon la revendication 1 ou 2, **caractérisée en ce que** la part en masse des éléments satisfait la relation suivante :

$$Poids(Mn) > poids(Si).$$

4. Utilisation selon la revendication 1, 2 ou 3, **caractérisée en ce que** la valeur de l'allongement à la rupture $A_5$ à une température de 400°C est supérieure à 10 %.

5. Utilisation selon l'une quelconque des revendications 1 à 4, **caractérisée en ce que** la taille de cristallite des phases de siliciure de Mn-Ni est de 0,1 à 100 $\mu$m.

6. Utilisation selon l'une quelconque des revendications 1 à 5, **caractérisée en ce que** celle-ci contient de 0,01 à 0,06 % de P, dans laquelle sont formées dans la matrice des phases de phosphure de Ni finement distribuées.

7. Utilisation selon la revendication 6, **caractérisée en ce que** la taille moyenne de grains des phases de phosphure de Ni finement distribuées est inférieure à 100 nm.

8. Utilisation selon l'une quelconque des revendications 1 à 7, **caractérisée en ce que** celle-ci contient de 0,1 à 2,5 % de Mn et de 0,1 à 1,5 % de Si.

9. Utilisation selon la revendication 8, **caractérisée en ce que** celle-ci contient de 0,1 à 1,6 % de Mn et de 0,1 à 0,7 % de Si.

10. Utilisation selon l'une quelconque des revendications 1 à 9, **caractérisée en ce que** celle-ci est passée au moins par un traitement thermique à de 300 à 500°C.

11. Utilisation selon l'une quelconque des revendications 1 à 9, **caractérisée en ce que** celle-ci est passée au moins par un traitement thermique à de 600 à 800°C.

12. Utilisation selon l'une quelconque des revendications 1 à 9, **caractérisée en ce que** celle-ci est passée par une combinaison d'au moins un recuit de mise en solution à de 600 à 800°C et d'au moins un durcissement par précipitation à de 300 à 500°C.

Fig. 1

Fig. 2

EP 2 013 371 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1535542 A
- US 1816509 A
- DE 4121994 C2
- US 4142918 A
- US 4406712 A
- WO 2005108631 A1
- US 5019185 A